(19) Europäisches Patentamt
European Patent Office
Office européen des brevets

(11) **EP 4 396 546 B1**

(12) **EUROPÄISCHE PATENTSCHRIFT**

(45) Veröffentlichungstag und Bekanntmachung des Hinweises auf die Patenterteilung:
**25.03.2026 Patentblatt 2026/13**

(21) Anmeldenummer: **22748371.6**

(22) Anmeldetag: **22.07.2022**

(51) Internationale Patentklassifikation (IPC):
*G01F 23/296* *(2022.01)*   *G01N 9/00* *(2006.01)*
*G01N 11/16* *(2006.01)*   *G01F 1/66* *(2022.01)*

(52) Gemeinsame Patentklassifikation (CPC):
**G01F 23/2967; G01F 23/296; G01N 9/002; G01N 11/16;** G01F 1/66; G01N 2009/006

(86) Internationale Anmeldenummer:
**PCT/EP2022/070632**

(87) Internationale Veröffentlichungsnummer:
**WO 2023/030755 (09.03.2023 Gazette 2023/10)**

(54) **VIBRONISCHER MULTISENSOR**

VIBRONIC MULTISENSOR

MULTICAPTEUR VIBRONIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.08.2021 DE 102021122534**

(43) Veröffentlichungstag der Anmeldung:
**10.07.2024 Patentblatt 2024/28**

(73) Patentinhaber: **Endress+Hauser SE+Co. KG**
**79689 Maulburg (DE)**

(72) Erfinder:
• **GIRARDEY, Romuald**
**68730 Blotzheim (FR)**

• **LOPATIN, Sergey**
**79540 Lörrach (DE)**
• **SCHLEIFERBÖCK, Jan**
**79595 Rümmingen (DE)**

(74) Vertreter: **Endress + Hauser Group Services (Deutschland) AG+Co. KG**
**Colmarer Straße 6**
**79576 Weil am Rhein (DE)**

(56) Entgegenhaltungen:
DE-A1- 102015 104 536   DE-A1- 102015 112 055
GB-A- 2 527 759   JP-A- S6 067 839
US-A1- 2002 167 414   US-B1- 6 260 408

**Beschreibung**

Die Erfindung betrifft ein Verfahren zur Bestimmung und/oder Überwachung zumindest einer ersten Prozessgröße eines Mediums in einem Behältnis mit den Merkmalen des Oberbegriffs des ersten Anspruchs. Das Medium befindet sich in einem Behältnis, beispielsweise in einem Behälter oder in einer Rohrleitung. Zur Durchführung des Verfahrens dient ein vibronischer Sensor zur Bestimmung und/oder Überwachung zumindest einer Prozessgröße mit zumindest einer Sensoreinheit umfassend eine mechanisch schwingfähige Einheit.

Ein gattungsgemäßes Verfahren lässt sich der US 6,260,408 B1 entnehmen.

Vibronische Sensoren finden vielfach Anwendung in der Prozess- und/oder Automatisierungstechnik. Im Falle von Füllstandsmessgeräten weisen sie zumindest eine mechanisch schwingfähige Einheit, wie beispielsweise eine Schwinggabel, einen Einstab oder eine Membran auf. Diese wird im Betrieb mittels einer Antriebs-/Empfangseinheit, häufig in Form einer elektromechanischen Wandlereinheit, zu mechanischen Schwingungen angeregt, welche wiederum beispielsweise ein piezoelektrischer Antrieb oder ein elektromagnetischer Antrieb sein kann. Entsprechende Feldgeräte werden von der Anmelderin in großer Vielfalt hergestellt und beispielsweise unter der Bezeichnung LIQUIPHANT oder SOLIPHANT vertrieben. Die zugrundeliegenden Messprinzipien sind im Prinzip aus einer Vielzahl von Veröffentlichungen bekannt. Die Antriebs-/Empfangseinheit regt die mechanisch schwingfähige Einheit mittels eines elektrischen Anregesignals zu mechanischen Schwingungen an. Umgekehrt kann die Antriebs-/Empfangseinheit die mechanischen Schwingungen der mechanisch schwingfähigen Einheit empfangen und in ein elektrisches Empfangssignal umwandeln. Bei der Antriebs-/Empfangseinheit handelt es sich entsprechend entweder um eine separate Antriebseinheit und eine separate Empfangseinheit, oder um eine kombinierte Antriebs-/Empfangseinheit.

Dabei ist die Antriebs-/Empfangseinheit in vielen Fällen Teil eines rückgekoppelten elektrischen Schwingkreises, mittels welchem die Anregung der mechanisch schwingfähigen Einheit zu mechanischen Schwingungen erfolgt. Beispielsweise muss für eine resonante Schwingung die Schwingkreisbedingung, gemäß welcher der Verstärkungsfaktor $\geq 1$ ist und alle im Schwingkreis auftretenden Phasen ein Vielfaches von 360° ergeben, erfüllt sein. Zur Anregung und Erfüllung der Schwingkreisbedingung muss eine bestimmte Phasenverschiebung zwischen dem Anregesignal und dem Empfangssignal gewährleistet sein. Deshalb wird häufig ein vorgebbarer Wert für die Phasenverschiebung, also ein Sollwert für die Phasenverschiebung zwischen dem Anregesignal und dem Empfangssignal eingestellt. Hierfür sind aus dem Stand der Technik unterschiedlichste Lösungen, sowohl analoge als auch digitale Verfahren, bekannt geworden, wie beispielsweise in den Dokumenten DE102006034105A1, DE102007013557A1, DE102005015547A1, DE102009026685A1, DE102009028022A1, DE102010030982A1 oder DE00102010030982A1 beschrieben.

Sowohl das Anregesignal als auch das Empfangssignal sind charakterisiert durch ihre Frequenz $\omega$, Amplitude A und/oder Phase $\Phi$. Entsprechend werden Änderungen in diesen Größen üblicherweise zur Bestimmung der jeweiligen Prozessgröße herangezogen. Bei der Prozessgröße kann es sich beispielsweise um einen Füllstand, einen vorgegebenen Füllstand, oder auch um die Dichte oder die Viskosität des Mediums, sowie um den Durchfluss handeln. Bei einem vibronischen Grenzstandschalter für Flüssigkeiten wird beispielsweise unterschieden, ob die schwingfähige Einheit von der Flüssigkeit bedeckt ist oder frei schwingt. Diese beiden Zustände, der Freizustand und der Bedecktzustand, werden dabei beispielsweise anhand unterschiedlicher Resonanz- oder Eigenfrequenzen, oder anhand von Frequenzen bei einer vorgebbaren Phasenverschiebung zwischen Anrege- und Empfangssignal, unterschieden.

Die Dichte und/oder Viskosität wiederum lassen sich mit einem derartigen Messgerät nur ermitteln, wenn die schwingfähige Einheit vollständig vom Medium bedeckt ist. Im Zusammenhang mit der Bestimmung der Dichte und/oder Viskosität sind ebenfalls unterschiedliche Möglichkeiten aus dem Stand der Technik bekannt geworden, wie beispielswiese die in den Dokumenten DE10050299A1, DE102007043811A1, DE10057974A1, DE102006033819A1, DE102015102834A1 oder DE102016112743A1 offenbarten.

Aus den Dokumenten DE102012100728A1 oder DE102017130527A1 sind verschiedene vibronische Sensoren bekannt geworden, bei denen die piezoelektrischen Elemente zumindest teilweise innerhalb der schwingfähigen Einheit angeordnet sind. Mit derartigen und ähnlichen Anordnungen lassen sich vorteilhaft mit einem einzigen Sensor mehrere Prozessgrößen bestimmen und zur Charakterisierung von unterschiedlichen Prozessen heranziehen, wie beispielsweise aus den Dokumenten WO2020/094266A1, DE102019116150A1, DE102019116151A1, DE02019116152A1, DE102019110821A1, DE102020105214A1 oder DE102020116278A1 bekannt geworden. Eine weitere Ausgestaltung mit Wandlereinheiten in den Gabelzinken offenbart die GB 2 527 759 A.

Zur Bestimmung von zumindest zwei verschiedenen Prozessgrößen mittels eines derartigen Multisensors wird die Sensoreinheit einerseits mittels eines Anregesignals zu mechanischen Schwingungen angeregt, und die mechanischen Schwingungen von der Sensoreinheit werden empfangen und in ein erstes Empfangssignal umgewandelt. Zudem wird von der Sensoreinheit ein Sendesignal ausgesendet und ein zweites Empfangssignal empfangen. Anhand des ersten Empfangssignals kann dann eine erste Prozessgröße und anhand des zweiten Empfangssignals eine zweite Prozessgröße ermittelt werden. Die Sensoreinheit ist Teil einer Vorrichtung zur Bestimmung und/oder Überwachung von zumindest zwei verschiedenen Prozessgrößen eines Mediums und umfasst eine mechanisch schwingfähige Einheit sowie zumindest ein piezoelektrisches Element. Bei der mechanisch schwingfähigen Einheit handelt es sich beispielsweise um eine Membran, einen Einstab, eine Anordnung von zumindest zwei Schwingelementen, oder um eine Schwinggabel. Die beiden piezoelektrischen Elemente können darüber hinaus zumindest teilweise als Antriebs-/Empfangseinheit zur Erzeugung der mechanischen Schwingungen der mechanisch schwingfähigen Einheit dienen.

Dass bei Messungen von Prozessgrößen stehende Wellen erzeugt werden, lässt sich der vorgenannten US 6,260,408 B1 oder der JP S60 67839 A entnehmen.

Die Messgenauigkeit und Messperformance derartiger Multisensoren hängt von vielen unterschiedlichen, beispielsweise geometrischen, Faktoren ab. Einerseits müssen stabile mechanische Schwingungen der schwingfähigen Einheit gewährleistet werden, zudem sind auch Anforderungen bezüglich einer Laufstrecke für das Sendesignal zu berücksichtigen.

Deshalb liegt der vorliegenden Erfindung die Aufgabe zugrunde, die Messgenauigkeit von derartigen Multisensoren weiter zu verbessern.

Diese Aufgabe wird gelöst durch ein Verfahren zur Bestimmung und/oder Überwachung zumindest einer ersten und einer zweiten Prozessgröße eines Mediums in einem Behältnis mit den Merkmalen des ersten Anspruchs.

Erfindungsgemäß wird das Sendesignal derart gewählt, dass zwischen einer ersten Komponente der Sensoreinheit und einer zweiten Komponente der Sensoreinheit eine stehende Welle zumindest in einem Teil des Mediums erzeugt wird.

Bei der mechanisch schwingfähigen Einheit handelt es sich um eine Anordnung mit zumindest zwei Schwingelementen, also eine Schwinggabel. Mittels des Anregesignals werden mechanische Schwingungen der schwingfähigen Einheit erzeugt, welche im Falle, dass die schwingfähige Einheit von Medium bedeckt ist, von den Eigenschaften des Mediums beeinflusst werden. Entsprechend kann anhand des ersten Empfangssignals, welches die Schwingungen der schwingfähigen Einheit repräsentiert, eine Aussage über die erste Prozessgröße ermittelt werden. Die erste Prozessgröße wird entsprechend anhand des vibronischen Messprinzips ermittelt.

Auch das Sendesignal durchläuft zumindest zeitweise und abschnittsweise das Medium und wird durch die physikalischen und/oder chemischen Eigenschaften des Mediums beeinflusst und kann entsprechend zur Bestimmung der zweiten Prozessgröße des Mediums herangezogen werden. Zur Bestimmung der zweiten Prozessgröße wird demnach das Ultraschall-Messprinzip herangezogen. Indem zwischen einer ersten Komponente der Sensoreinheit, beispielsweise einem piezoelektrischen Element, und einer zweiten Komponente der Sensoreinheit eine stehende Welle erzeugt wird, kann die zweite Prozessgröße, insbesondere eine Schallgeschwindigkeit des Mediums, indirekt anhand einer Resonanz des Mediums ermittelt werden. Hierdurch kann die Messgenauigkeit mit einfachen Mitteln erhöht werden. Zudem können deutlich kompaktere Sensoren realisiert werden. Bei einer Auswertung des zweiten Empfangssignals hinsichtlich der Laufzeit dagegen hängt die erreichbare Messgenauigkeit empfindlich von der Laufstrecke ab, was bei kleinen Laufstrecken zu erheblichen Ungenauigkeiten oder zu einem erhöhten Aufwand hinsichtlich der Detektionsmittel, die zur Realisierung einer entsprechenden Vorrichtung verwendet werden, und zu einem erhöhten Energiebedarf eines entsprechenden Messgeräts führt.

Im Rahmen der vorliegenden Erfindung ist es vorteilhaft möglich, zumindest zwei Messprinzipien in einer einzigen Vorrichtung zu realisieren. Die Sensoreinheit führt einerseits mechanische Schwingungen aus; zudem wird ein Sendesignal ausgesendet. In Reaktion auf die mechanischen Schwingungen und auf das Sendesignal werden zwei Empfangssignale empfangen und hinsichtlich zumindest zwei unterschiedlicher Prozessgrößen ausgewertet. Die beiden Empfangssignale können dabei vorteilhaft unabhängig voneinander ausgewertet werden. So kann die Anzahl ermittelbarer Prozessgrößen deutlich erhöht werden, was zu einer höheren Funktionalität des jeweiligen Sensors bzw. in einem erweiterten Anwendungsbereich resultiert.

In einer Ausgestaltung des Verfahrens handelt es sich bei dem Anregesignal um ein elektrisches Signal mit zumindest einer vorgebbaren Anregefrequenz, insbesondere um ein sinusförmiges, ein rechteckförmiges, ein trapezförmiges, ein dreieckförmiges oder ein sägezahnförmiges Signal.

In einer weiteren Ausgestaltung handelt es sich bei dem Sendesignal um ein elektrisches Signal mit zumindest einer vorgebbaren Sendefrequenz, insbesondere um ein rechteckförmiges, ein trapezförmiges, ein dreieckförmiges oder ein sägezahnförmiges Signal, vorzugsweise um ein sinusförmiges Signal.

In einer bevorzugten Ausgestaltung wird ein Wert für eine Sendefrequenz des Sendesignals in Abhängigkeit des Abstands der ersten Komponente der Sensoreinheit und der zweiten Komponente der Sensoreinheit gewählt. In dieser Hinsicht ist es von Vorteil, wenn der Wert für die Sendefrequenz derart gewählt wird, dass der Abstand einem ganzzahligen Vielfachen der halben Wellenlänge entspricht.

Durch eine entsprechende Wahl der Sendefrequenz kann das Entstehen einer stehenden Welle zwischen einer ersten Komponente der Sensoreinheit und einer zweiten Komponente der Sensoreinheit gewährleistet werden.

In einer weiteren Ausgestaltung des Verfahrens wird der Wert für die Sendefrequenz anhand einer Impedanz oder einer Phase zwischen dem Sendesignal und dem zweiten Empfangssignal als Funktion der Sendefrequenz ermittelt. Insbesondere kann ein sog. Frequenz-Sweep durchgeführt werden, bei welchem das Sendesignal sukzessive verschiedene Sendefrequenz eines vorgebbaren Frequenzintervalls durchläuft. Anhand des Frequenz-Sweeps kann dann wiederum eine Resonanz im Medium ermittelt werden.

In dieser Hinsicht ist es von Vorteil, wenn anhand der Impedanz oder der Phase zwischen dem Sendesignal und dem zweiten Empfangssignal als Funktion der Sendefrequenz eine Aussage über einen Ansatz oder eine Blasenbildung im Bereich der Sensoreinheit, oder über eine Dämpfung der Sensoreinheit getroffen wird. Die vorliegende Erfindung ermöglicht es somit, zusätzlich eine Zustandsüberwachung der Sensoreinheit durchzuführen. Beispielsweise kann zur Zustandsüberwachung eine Breite eines Resonanzpeaks des Empfangssignals als Funktion der Sendefrequenz ausgewertet werden.

In einer Ausgestaltung des erfindungsgemäßen Verfahrens werden ein erster und ein zweiter Wert für die Sendefrequenz des Sendesignals in Abhängigkeit des Abstands der ersten Komponente der Sensoreinheit und der zweiten Komponente der Sensoreinheit gewählt, und zur Bestimmung der zweiten Prozessgröße herangezogen. Sowohl die erste als auch die zweite Sendefrequenz werden dabei vorzugsweise derart gewählt, dass eine stehende Welle im Medium zwischen der ersten Komponente der Sensoreinheit und der zweiten Komponente der Sensoreinheit erzeugt wird. Durch die Verwendung von Sendesignalen mit zwei unterschiedlichen Sendefrequenzen können verschiedene Einflussgrößen für die Bestimmung und/oder Überwachung der Prozessgröße eliminiert werden, beispielsweise ein Einfluss der Temperatur oder eine Konzentrationsänderung zumindest einer Komponente des Mediums. Dadurch kann die Messgenauigkeit eines entsprechenden Messgeräts, welches zur Durchführung des erfindungsgemäßen Verfahrens geeignet ist, noch weiter erhöht werden.

In einer weiteren Ausgestaltung handelt es sich bei der ersten Prozessgröße um die Dichte des Mediums und bei der zweiten Prozessgröße um die Schallgeschwindigkeit innerhalb des Mediums oder eine daraus abgeleitete Größe.

Zudem kann vorzugsweise zumindest eine dritte Prozessgröße, insbesondere die Viskosität des Mediums, bestimmt werden.

Erfindungsgemäß umfasst die Sensoreinheit eine mechanisch schwingfähige Einheit in Form einer Schwinggabel mit zwei Schwingelementen und zumindest einem piezoelektrischen Element umfasst, wobei das piezoelektrische Element zumindest teilweise innerhalb eines Schwingelements angeordnet ist. Entsprechende Ausgestaltungen einer Sensoreinheit sind beispielsweise in den Dokumenten DE102012100728A1 und DE102017130527A1 beschrieben worden. Bei den in den beiden Dokumenten beschriebenen möglichen Ausgestaltungen der Sensoreinheit handelt es sich um beispielhafte mögliche konstruktive Ausgestaltungen der Sensoreinheit.

Erfindungsgemäß wird die stehende Welle zwischen den beiden Schwingelementen erzeugt, insbesondere wird eine Sendefrequenz des Sendesignals in Abhängigkeit eines Abstands zwischen den beiden Schwingelementen gewählt.

Die Sensoreinheit umfasst ein erstes und ein zweites piezoelektrisches Element, wobei das erste piezoelektrische Element zumindest teilweise innerhalb des ersten Schwingelements und ein zweites piezoelektrisches Element zumindest teilweise innerhalb des zweiten Schwingelements angeordnet ist.

Erfindungsgemäß wird mittels des ersten piezoelektrischen Elements ein erstes Sendesignal und mittels des zweiten piezoelektrischen Elements ein zweites Sendesignal ausgesendet, wobei das erste und zweite Sendesignal derart gewählt werden, dass die beiden Sendesignale phasengleich sind. Es kommt zu einer Überlagerung des ersten und zweiten Sendesignals bzw. der entsprechenden Empfangssignale. Dies hat den Vorteil, dass stehenden Wellen mit Wellenlängen, welche ungerade Vielfache der halben Wellenlänge sind, nicht angeregt werden.

Die vorliegende Erfindung und ihre vorteilhaften Ausgestaltungen werden anhand der nachfolgenden Figuren näher erläutert. Es zeigt:

Fig. 1: eine schematische Skizze eines vibronischen Sensors gemäß Stand der Technik,

Fig. 2: verschiedene mögliche Ausgestaltungen für vibronische Sensoren gemäß Stand der Technik, bei denen piezoelektrische Elemente innerhalb der Schwingelemente angeordnet sind,

Fig. 3 illustriert eine nicht-erfindungsgemäße Ausgestaltung für das Verfahren,

Fig. 4 illustriert eine bevorzugte Ausgestaltung für das erfindungsgemäße Verfahren,

Fig. 5 zeigt beispielhaft verschiedene Resonanzspektren entsprechend dem Ausführungsbeispiel aus der Figur Fig. 4, und

Fig. 6 illustriert die unterschiedliche Überlappung von Wertebereichen für die Sendefrequenz des Sendesignals bei unterschiedlichen Resonanzen für das Ausführungsbeispiel gemäß der Figur Fig. 4.

In den Figuren sind gleiche Elemente jeweils mit demselben Bezugszeichen versehen.

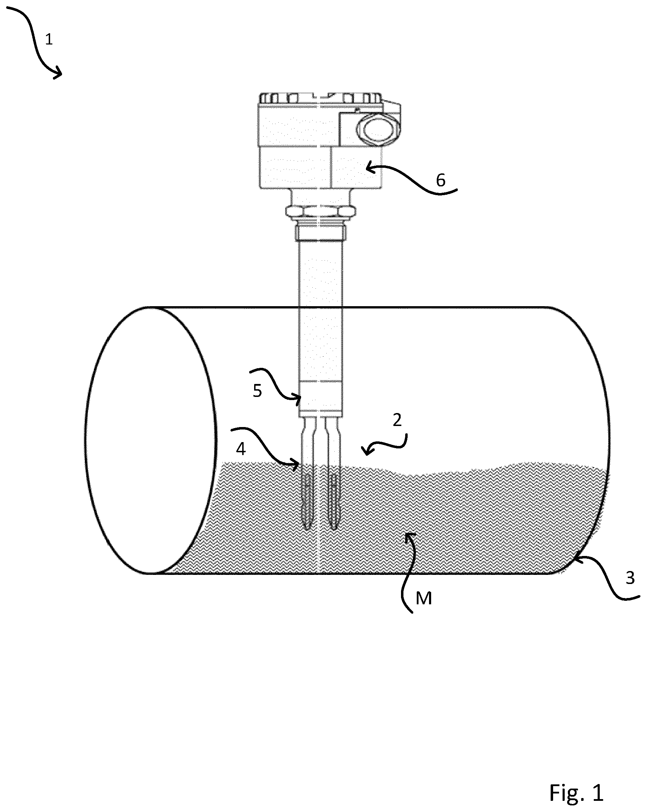

In Fig. 1 ist ein vibronischer Sensor 1 mit einer Sensoreinheit 2 gezeigt. Der Sensor verfügt über eine mechanisch schwingfähige Einheit 4 in Form einer Schwinggabel, welche teilweise in ein Medium M eintaucht, welches sich in einem Behälter 3 befindet. Die schwingfähige Einheit 4 wird mittels der Anrege-/Empfangseinheit 5 zu mechanischen Schwingungen angeregt, und kann beispielsweise durch einen piezoelektrischen Stapel- oder Bimorphantrieb sein. Andere vibronische Sensoren verfügen beispielsweise über elektromagnetische Antriebs/Empfangseinheiten 5. Es ist sowohl möglich, eine einzige Antriebs-/Empfangseinheit 5 zu verwenden, welche zur Anregung der mechanischen Schwingungen sowie zu deren Detektion dient. Ebenso ist es aber denkbar, je eine Antriebseinheit und eine Empfangseinheit zu realisieren. Dargestellt ist in Fig. 1 ferner eine Elektronikeinheit 6, mittels welcher die Signalerfassung, -auswertung und/oder -speisung erfolgt.

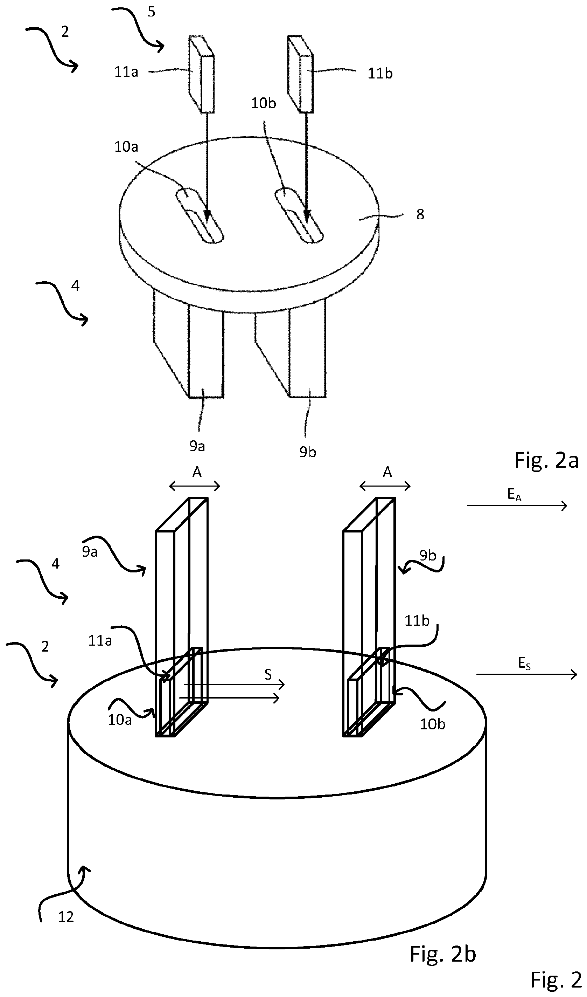

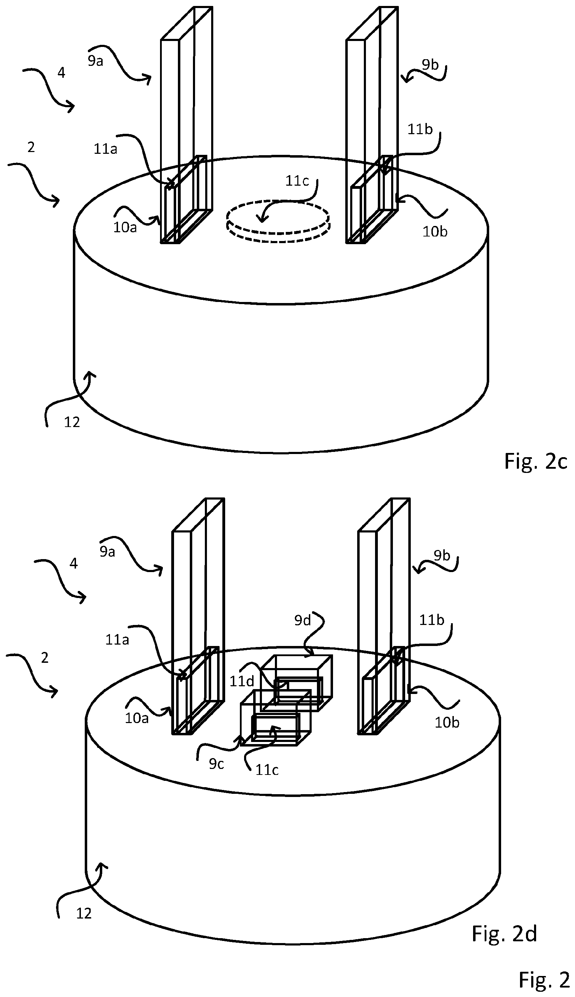

In Fig. 2 sind beispielhaft verschiedene Sensoreinheiten 2 von vibronischen Sensoren 1 gezeigt, bei welchen die piezoelektrischen Elemente. 5 in einem Innenvolumen der schwingfähigen Einheit angeordnet sind. Die in Fig. 2a gezeigte mechanisch schwingfähige Einheit 4 umfasst zwei an einer Basis 8 angebrachte Schwingelemente 9a,9b, welche mithin auch als Gabelzinken bezeichnet werden. Optional kann an den Endseiten der beiden Schwingelemente 9a,9b außerdem jeweils ein Paddel angeformt sein [hier nicht gezeigt]. In jedem der beiden Schwingelemente 9a,9b ist jeweils ein, insbesondere taschenartiger, Hohlraum 10a, 10b eingebracht, in welchem jeweils zumindest ein piezoelektrisches Element 11a, 11b der Antriebs-/Empfangseinheit 5 angeordnet ist. Vorzugsweise sind die piezoelektrischen Elemente 11a und 11b innerhalb der Hohlräume 10a und 10b vergossen. Die Hohlräume 10a, 10b können dabei so beschaffen sein, dass sich die beiden piezoelektrischen Elemente 11a, 11b vollständig oder teilweise im Bereich der beiden Schwingelemente 9a, 9b befinden Eine solche sowie ähnliche Anordnungen sind in der DE102012100728A1 ausführlich beschrieben.

Eine weitere beispielhafte, mögliche Ausgestaltung einer Sensoreinheit 2 ist in Fig. 2b dargestellt. Die mechanisch schwingfähige Einheit 4 verfügt über zwei parallel zueinander ausgerichtete, hier stabförmig ausgestaltete, auf einem scheibenförmigen Element 12 angebrachte, Schwingelemente 9a, 9b, welche getrennt voneinander zu mechanischen Schwingungen anregbar sind, und bei denen die Schwingungen ebenfalls getrennt voneinander empfangen und ausgewertet werden können. Beide Schwingelemente 9a und 9b weisen jeweils einen Hohlraum 10a und 10b auf, in welchen im dem scheibenförmigen Element 12 zugewandten Bereich jeweils zumindest ein piezoelektrisches Element 11a und 11b angeordnet ist. Bezüglich der Ausgestaltung gemäß Fig. 2b sei wiederum ferner auf in die DE102017130527A1 verwiesen.

Wie in Fig. 2b schematisch eingezeichnet, wird die Sensoreinheit 2 einerseits mit einem Anregesignal A beaufschlagt, derart, dass die schwingfähige Einheit 4 zu mechanischen Schwingungen angeregt wird. Die Schwingungen werden dabei vermittels der beiden piezoelektrischen Elemente 11a und 11b erzeugt. Es ist sowohl denkbar, dass beide piezoelektrischen Elemente mit demselben Anregesignal A beaufschlagt werden, als auch eine Beaufschlagung des ersten Schwingelements 11a mittels eines ersten Anregesignals $A_1$ und des zweiten Schwingelements 11b mittels eines zweiten Anregesignals $A_2$. Ebenso ist es sowohl denkbar, dass anhand der mechanischen Schwingungen ein erstes Empfangssignal $E_A$, oder von jedem Schwingelement 9a,9b ein separates Empfangssignal $E_{A1}$ bzw. $E_{A2}$ empfangen wird.

Darüber hinaus kann beispielsweise vom ersten piezoelektrischen Element 11a ausgehend zudem ein Sendesignal S ausgesendet werden, welches von dem zweiten piezoelektrischen Element 11b in Form eines zweiten Empfangssignals $E_S$ empfangen wird. Da die beiden piezoelektrischen Elemente 11a und 11b zumindest im Bereich der Schwingelemente 9a und 9b angeordnet sind, durchläuft das Sendesignal S das Medium M, sofern die Sensoreinheit 2 mit dem Medium M in Kontakt ist und wird entsprechend von den Eigenschaften des Mediums M beeinflusst. Ebenso ist es aber denkbar, dass das Sendesignal S von dem ersten piezoelektrischen Element 11a im Bereich des ersten Schwingelements 9a ausgesendet wird und an dem zweiten Schwingelement 9b reflektiert wird. In diesem Falle wird das zweite Empfangssignal $E_S$ vom ersten piezoelektrischen Element 11a empfangen. Das Sendesignal S durchläuft in diesem Falle also das Medium M zweimal.

Neben diesen beiden gezeigten Ausgestaltungen einer erfindungsgemäßen Vorrichtung 1 sind noch zahlreiche weitere Varianten denkbar, welche nicht unter die vorliegende Erfindung fallen. Beispielsweise ist es für die Ausgestaltungen gemäß der Figuren Fig. 2a und Fig. 2b möglich, lediglich ein piezoelektrisches Element 11a,11b zu verwenden und zumindest in einem der beiden Schwingelemente 9a, 9b anzuordnen. In diesem Falle dient das piezoelektrische Element 9a zur Erzeugung des Anregesignals, und des Sendesignals S, sowie zum Empfangen des ersten $E_1$ und zweiten Empfangssignals $E_2$. Dann wird das Sendesignal S von dem ersten piezoelektrischen Element 11a im Bereich des ersten Schwingelements 9a ausgesendet und an dem zweiten Schwingelement 9b reflektiert, so dass auch das zweite Empfangssignal $E_S$ vom ersten piezoelektrischen Element 11a empfangen wird. Das Sendesignal S durchläuft in diesem Falle das Medium M zweimal, was zu einer Verdoppelung einer Laufzeit $\tau$ des Sendesignals S führt.

Eine weitere, beispielhafte Möglichkeit ist in Fig. 2c dargestellt. Hier ist ein drittes piezoelektrisches Element 11c im Bereich der Membran 12 vorgesehen. Das dritte piezoelektrische Element 11c dient der Erzeugung des Anregesignals A und zum Empfangen des ersten Empfangssignals $E_1$; das erste 11a und zweite piezoelektrische Element 11b dienen der Erzeugung des Sendesignals S bzw. dem Empfangen des zweiten Emp-

fangssignals $E_2$. Alternativ ist es beispielsweise möglich, mit dem ersten 11a und/oder zweiten piezoelektrischen Element 11b das Anregesignal A und das Sendesignal S zu erzeugen sowie das zweite Empfangssignal $E_2$ zu empfangen, wobei das dritte piezoelektrische Element 11c zum Empfangen des ersten Empfangssignals $E_1$ dient. Ebenso ist es möglich, mit dem ersten 11a und/oder zweiten piezoelektrischen Element 11b das Sendesignal S und mit dem dritten piezoelektrischen Element 11c das Anregesignal A zu erzeugen und mit dem ersten 11a und/oder zweiten piezoelektrischen Element 11b das erste $E_1$ und/oder zweite Empfangssignal $E_2$ zu empfangen. Auch im Falle der Fig. 2c ist es für andere Ausgestaltungen möglich, auf das erste 11a oder zweite piezoelektrische Element 11b zu verzichten.

Noch eine mögliche Ausgestaltung der Vorrichtung 1 ist Gegenstand von Fig. 2d. Die Vorrichtung umfasst ausgehend von der Ausgestaltung aus Fig. 2b ein drittes 9c und ein viertes Schwingelement 9d. Diese dienen jedoch nicht einer Schwingungserzeugung. Vielmehr ist in den zusätzlichen Elemente 9c, 9d jeweils ein drittes 11c und viertes piezoelektrisches Element 11d angeordnet. In diesem Falle wird die vibronische Messung mittels der ersten beiden piezoelektrischen Elemente 11a, 11b und die Ultraschallmessung mittels der anderen beiden piezoelektrischen Elemente 11c,11d durchgeführt. Auch hier kann je Messprinzip auf ein piezoelektrisches Element, z. B. 11b und 11d verzichtet werden. Aus Symmetriegründen ist es dagegen vorteilhaft, stets zwei zusätzliche Schwingelemente 9c, 9d zu verwenden.

Erfindungsgemäß wird das Sendesignal S derart gewählt, dass zwischen einer ersten Komponente der Sensoreinheit 2, beispielsweise dem ersten piezoelektrischen Element 11a, und einer zweiten Komponente der Sensoreinheit 2, insbesondere dem zweiten Schwingelement 9b oder einem weiteren piezoelektrischen Element 11b, eine stehende Welle zumindest in einem Teil des Mediums M erzeugt wird, also eine Überlagerung zweier gegenläufiger Wellen gleicher Sendefrequenz und gleicher Amplitude, bei denen an Schwingungsknotenpunkten a die Auslenkung stets null ist. Zur Bestimmung einer Sendefrequenz $f_S$ für das Sendesignal S kann beispielsweise ein Frequenz-Sweep in einem vorgebbaren Frequenzintervall durchgeführt und eine Impedanz Z oder Phase Φ zwischen einem Eingang und Ausgang innerhalb der Elektronik 6 gemessen werden.

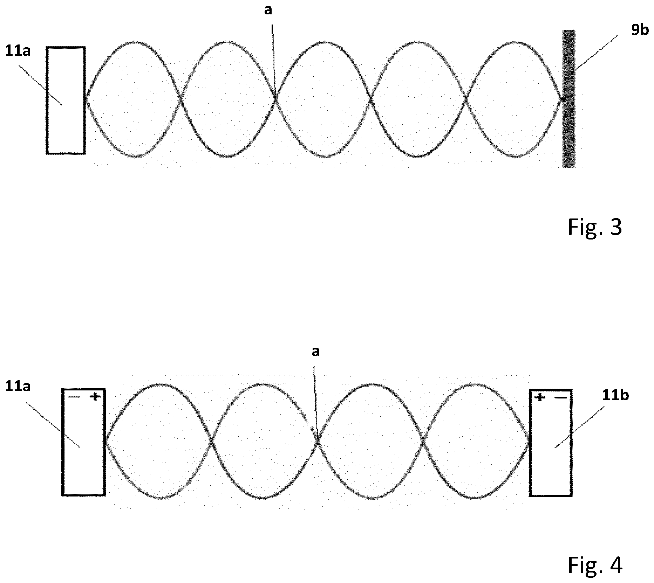

In Fig. 3 ist eine nicht erfindungsgemäße Ausgestaltung für das Verfahren dargestellt. Hier umfasst die zur Durchführung des Verfahrens verwendete Vorrichtung 1 ein einziges piezoelektrisches Element, z. B. 11a, welches zur Erzeugung bzw. zum Aussenden des Sendesignals S verwendet wird. Das Sendesignal S wird an dem zweiten Schwingelement 9b reflektiert und von dem ersten piezoelektrischen Element 11a empfangen. Zwischen dem in dem ersten Schwingelement 9a [nicht dargestellt] und zweiten Schwingelement 9b bilden sich stehende Wellen aus, falls der Abstand zweier benachbarter Knoten der Hälfte der Wellenlänge λ der ursprünglichen Welle beträgt.

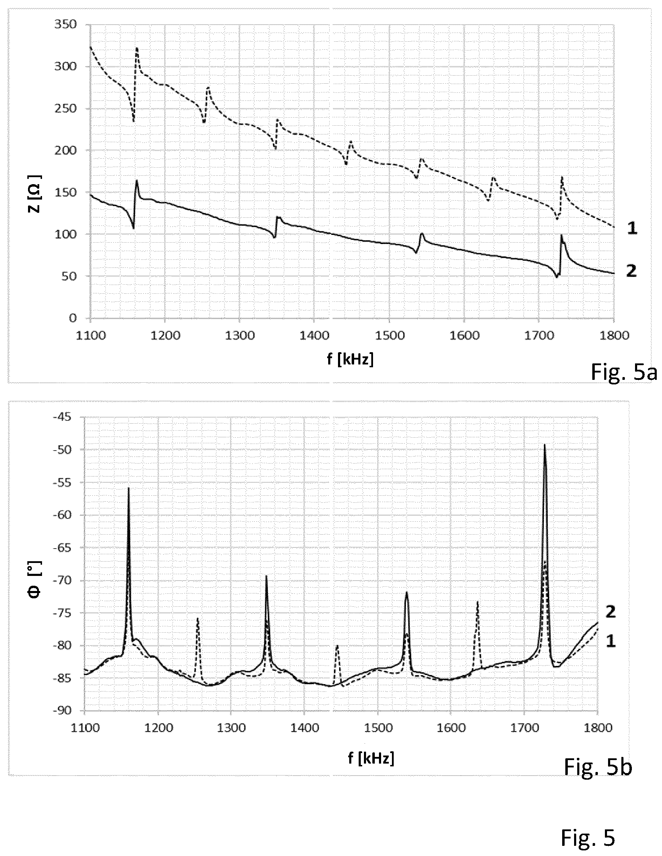

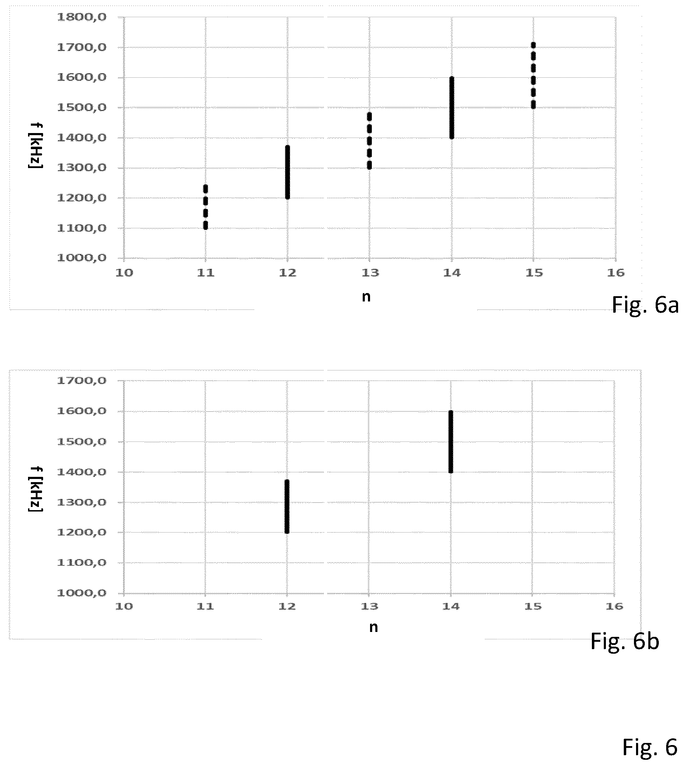

Die Vorrichtung 1, welche zur Durchführung eines erfindungsgemäßen Verfahrens verwendet wird, umfasst zwei piezoelektrische Elemente 11a und 11b, welche jeweils in einem Schwingelement 9a und 9b angeordnet sind. Erfindungsgemäß wird mittels beiden piezoelektrischen Elementen 9a und 9b jeweils ein erstes $S_1$ und ein zweites Sendesignal $S_2$ ausgesendet, welche beiden Sendesignale $S_1$ und $S_2$ phasengleich sind. Dies bietet weitere messtechnische Vorteile, wie nachfolgend anhand der Figuren Fig. 5 und Fig. 6 erläutert.

In Fig. 5 sind typische Resonanzspektrum der Impedanz Z (Fig. 5a) und der Phase Φ (Fig. 5b) als Funktion der Sendefrequenz $f_S$ von Wasser entsprechend der in den Figuren Fig. 3 (mit Ziffer 1 bezeichnete Kurven) und Fig. 4 (mit Ziffer 2 bezeichnete Kurven) beschriebenen Ausgestaltungen gezeigt. Während für die Kurven 1 entsprechend der Ausgestaltung gemäß Fig. 3, also bei Verwendung eines einzigen Sendesignals S, alle Resonanzen $n\frac{\lambda}{2}$ sichtbar sind, werden für die Ausgestaltung gemäß Fig. 4 (Kurven 2) Resonanzen, für die n eine ungerade Zahl ist, dagegen nicht angeregt. Dies hat den Vorteil, dass Überlappungen von Wertebereichen für benachbarte Resonanzfrequenzen aufgrund von verschiedenen Einflussgrößen für die Sendefrequenzen, beispielsweise der Temperatur oder Änderungen der Konzentration zumindest einer Komponente des Mediums, vermieden werden können. Dies ist auch in Fig. 6 illustriert.

Fig. 6a zeigt die Wertebereiche für die Sendefrequenzen zu den Resonanzen mit n=11-15 für eine wässrige Lösung für Temperaturen T des Mediums im Bereich T=0-99 °C. Es ist deutlich zu erkennen, dass Wertebereiche der temperaturabhängigen Sendefrequenz $f_S$ für benachbarte Resonanzen n und n+1 überlappen. Im Falle, dass zwei piezoelektrische Elemente 11a und 11b vorhanden und mittels beiden piezoelektrischen Elementen 11a und 11b jeweils phasengleiche Sendesignale S ausgesendet werden, werden dagegen solche Resonanzen, für welche n eine ungerade Zahl ist, nicht angeregt, vgl. Fig. 6b. Dies führt dazu, dass Wertebereiche der Sendefrequenz $f_S$ für benachbarte angeregte Resonanzen nicht mehr oder deutlich weniger überlappen, was eine vereinfachte Auswertung des zweiten Empfangssignals $E_S$ ermöglicht.

Insgesamt ermöglicht die Verwendung eines erfindungsgemäßen Verfahrens eine verbesserte Messperformance von vibronischen Multisensoren 1, welche unabhängig voneinander nach dem vibronischen Messprinzip und nach dem Ultraschall-Messprinzip arbeiten und mehrere Prozessgrößen eines Mediums M bestimmten können. Die Messgenauigkeit hinsichtlich des Ultraschall-Messprinzips wird bei anderen Auswertearten stark von der Laufstrecke für das Sendesignal S beeinflusst, was die Realisierung kompakter, kleiner Sensoren 1 deutlich erschwert. Mit einer indirekten Auswertung des zweiten Empfangssignals $E_S$ unter Ausbildung stehender Welle können diese Probleme eliminiert werden. Durch die Auswertung des zweiten Empfangssignals $E_S$ bei verschiedenen Resonanzfrequenzen $f_S$ können zudem verschiedene, auf die Prozessgrößenbestimmung einwirkende, Einflussfaktoren kompensiert bzw. eliminiert werden und/oder eine Zustandsüberwachung der Sensoreinheit 4 vorgenommen werden.

**Bezugszeichenliste**

| 1 | Vibronischer Sensor |
|---|---|
| 2 | Sensoreinheit |
| 3 | Behälter |
| 4 | Schwingfähige Einheit |
| 5 | Antriebs-/Empfangseinheit |
| 6 | Elektronik |
| 8 | Basis |
| 9a, 9b | Schwingelemente |
| 10a, 10b | Hohlräume |
| 11a, 11b | piezoelektrische Elemente |

| M | Medium |
|---|---|
| P | Prozessgröße |
| T | Temperatur |
| A | Anregesignal |
| S | Sendesignal |
| $E_A$ | erstes Empfangssignal |
| $E_S$ | zweites Empfangssignal |
| Z | Impedanz |
| Φ | Phase |
| $f_S$ | Sendefrequenz des Sendesignals |
| λ | Wellenlänge des Sendesignals |
| n | natürliche Zahl |
| a | Schwingungsknoten |

**Patentansprüche**

1. Verfahren zur Bestimmung und/oder Überwachung zumindest einer ersten und einer zweiten Prozessgröße eines Mediums (M) in einem Behältnis (3), wobei

   - eine Sensoreinheit (2) mittels eines Anregesignals (A) zu mechanischen Schwingungen angeregt wird,
   - die mechanischen Schwingungen von der Sensoreinheit (2) empfangen und in ein erstes Empfangssignal ($E_A$) umgewandelt werden,
   - von der Sensoreinheit (2) ein Sendesignal (S) ausgesendet und ein zweites Empfangssignal ($E_S$) empfangen wird, und
   - anhand des ersten Empfangssignals ($E_A$) eine erste Prozessgröße und anhand des zweiten Empfangssignals ($E_S$) eine zweite Prozessgröße ermittelt wird, und
wobei das Sendesignal (S) derart gewählt wird, dass zwischen einer ersten Komponente (9a) der Sensoreinheit (2) und einer zweiten Komponente (9b) der Sensoreinheit (2) eine stehende Welle zumindest in einem Teil des Mediums (M) erzeugt wird,
**dadurch gekennzeichnet,**
**dass** die Sensoreinheit (2) eine mechanisch schwingfähige Einheit (4) in Form einer Schwinggabel mit zwei Schwingelementen (9a, 9b), ein erstes piezoelektrisches Element (11a) und ein zweites piezoelektrisches Element (11b) umfasst,
**dass** das erste piezoelektrische Element (11a) zumindest teilweise innerhalb eines ersten Schwingelements (9a) und das zweite piezoelektrische Element (11b) zumindest teilweise innerhalb eines zweiten Schwingelements (9b) angeordnet ist,
**dass** die stehende Welle zwischen den beiden Schwingelementen (9a, 9b) erzeugt wird, dass mittels des ersten piezoelektrischen Elements (11a) ein erstes Sendesignal (S1) ausgesendet wird,
**dass** mittels des zweiten piezoelektrischen Elements (11b) ein zweites Sendesignal (S2) ausgesendet wird, und
**dass** das erste Sendesignal (S1) und das zweite Sendesignal (S2) derart gewählt werden, dass die beiden Sendesignale (S1, S2) phasengleich sind.

2. Verfahren nach Anspruch 1,
wobei es sich bei dem Anregesignal (A) um ein elektrisches Signal mit zumindest einer vorgebbaren Anregefrequenz handelt.

3. Verfahren nach Anspruch 1 oder 2,
wobei es sich bei den Sendesignalen (S1, S2) um elektrische Signale mit zumindest einer vorgebbaren Sendefrequenz ($f_S$) handelt.

4. Verfahren nach Anspruch 3,
wobei ein Wert für die Sendefrequenz ($f_S$) in Abhängigkeit des Abstands des ersten Schwingelements (9a) und des zweiten Schwingelements (9b) derart gewählt wird, dass der Abstand einem ganzzahligen Vielfachen der halben Wellenlänge (λ) entspricht.

5. Verfahren nach Anspruch 3 oder 4,
wobei ein erster Wert und ein zweiter Wert für die Sendefrequenz ($f_S$) in Abhängigkeit des Abstands des ersten Schwingelements (9a) und des zweiten Schwingelements (9b) zur Bestimmung der zweiten Prozessgröße herangezogen werden.

6. Verfahren nach einem der Ansprüche 1 bis 5,

wobei es sich bei der ersten Prozessgröße um die Dichte des Mediums (M) und bei der zweiten Prozessgröße um die Schallgeschwindigkeit innerhalb des Mediums (M) oder eine daraus abgeleitete Größe handelt.

7. Verfahren nach einem der Ansprüche 1 bis 6, wobei die Viskosität des Mediums (M) als dritte Prozessgröße bestimmt wird.

**Claims**

1. **Method for determining and/or monitoring at least a first and a second process variable of a medium (M) in a container (3),** wherein

   • a sensor unit (2) is excited to mechanical vibrations by means of an excitation signal (A),
   • the mechanical vibrations are received by the sensor unit (2) and converted into a first received signal (EA),
   • a transmission signal (S) is emitted by the sensor unit (2) and a second received signal (ES) is received, and
   • based on the first received signal (EA) a first process variable is determined, and based on the second received signal (ES) a second process variable is determined, and wherein the transmission signal (S) is selected such that a standing wave is generated between a first component (9a) of the sensor unit (2) and a second component (9b) of the sensor unit (2) in at least a part of the medium (M),

   **characterized in that**

   the sensor unit (2) comprises a mechanically oscillatable unit (4) in the form of a tuning fork with two oscillating elements (9a, 9b), a first piezoelectric element (11a), and a second piezoelectric element (11b),
   that the first piezoelectric element (11a) is arranged at least partially within a first oscillating element (9a) and the second piezoelectric element (11b) is arranged at least partially within a second oscillating element (9b),
   that the standing wave is generated between the two oscillating elements (9a, 9b),
   that a first transmission signal (S1) is emitted by means of the first piezoelectric element (11a),
   that a second transmission signal (S2) is emitted by means of the second piezoelectric element (11b), and
   that the first transmission signal (S1) and the second transmission signal (S2) are selected such that both transmission signals (S1, S2) are in phase.

2. **Method according to claim 1,**
   wherein the excitation signal (A) is an electrical signal having at least one predetermined excitation frequency.

3. **Method according to claim 1 or 2,**
   wherein the transmission signals (S1, S2) are electrical signals having at least one predetermined transmission frequency (fS).

4. **Method according to claim 3,**
   wherein a value for the transmission frequency (fS) is selected depending on the distance between the first oscillating element (9a) and the second oscillating element (9b) such that the distance corresponds to an integer multiple of half the wavelength ($\lambda$).

5. **Method according to claim 3 or 4,**
   wherein a first value and a second value of the transmission frequency (fS) are used, depending on the distance between the first oscillating element (9a) and the second oscillating element (9b), to determine the second process variable.

6. **Method according to any of claims 1 to 5,**
   wherein the first process variable is the density of the medium (M) and the second process variable is the speed of sound within the medium (M) or a variable derived therefrom.

7. **Method according to any of claims 1 to 6,**
   wherein the viscosity of the medium (M) is determined as a third process variable.

**Revendications**

1. **Procédé pour déterminer et/ou surveiller au moins une première et une deuxième grandeur de procédé d'un milieu (M) dans un récipient (3),** dans lequel

   • une unité de capteur (2) est excitée à des oscillations mécaniques au moyen d'un signal d'excitation (A),
   • les oscillations mécaniques sont reçues par l'unité de capteur (2) et converties en un premier signal reçu (EA),
   • un signal d'émission (S) est émis par l'unité de capteur (2) et un second signal reçu (ES) est capté, et
   • une première grandeur de procédé est déterminée sur la base du premier signal reçu (EA) et une deuxième grandeur de procédé est déterminée sur la base du second signal reçu (ES), et

   le signal d'émission (S) est choisi de manière à générer une onde stationnaire entre une première composante (9a) de l'unité de capteur (2) et une deuxième composante (9b) de l'unité de capteur (2) dans au moins une partie du milieu (M),

**caractérisé en ce que**

l'unité de capteur (2) comprend une unité mécaniquement oscillante (4) sous forme d'une fourche vibrante avec deux éléments oscillants (9a, 9b), un premier élément piézoélectrique (11a) et un second élément piézoélectrique (11b),

le premier élément piézoélectrique (11a) étant disposé au moins partiellement à l'intérieur d'un premier élément oscillant (9a) et le second élément piézoélectrique (11b) étant disposé au moins partiellement à l'intérieur d'un second élément oscillant (9b),

l'onde stationnaire étant générée entre les deux éléments oscillants (9a, 9b),

un premier signal d'émission (S1) étant émis au moyen du premier élément piézoélectrique (11a),

un deuxième signal d'émission (S2) étant émis au moyen du second élément piézoélectrique (11b), et

le premier signal d'émission (S1) et le deuxième signal d'émission (S2) étant choisis de manière à être en phase.

2. **Procédé selon la revendication 1,**
dans lequel le signal d'excitation (A) est un signal électrique présentant au moins une fréquence d'excitation prédéterminée.

3. **Procédé selon la revendication 1 ou 2,**
dans lequel les signaux d'émission (S1, S2) sont des signaux électriques présentant au moins une fréquence d'émission prédéterminée (fS).

4. **Procédé selon la revendication 3,**
dans lequel une valeur de la fréquence d'émission (fS) est choisie en fonction de la distance entre le premier élément oscillant (9a) et le second élément oscillant (9b) de manière que cette distance corresponde à un multiple entier de la demi-longueur d'onde ($\lambda$).

5. **Procédé selon la revendication 3 ou 4,**
dans lequel une première valeur et une deuxième valeur de la fréquence d'émission (fS), dépendant de la distance entre le premier élément oscillant (9a) et le second élément oscillant (9b), sont utilisées pour déterminer la deuxième grandeur de procédé.

6. **Procédé selon l'une des revendications 1 à 5,**
dans lequel la première grandeur de procédé est la densité du milieu (M) et la deuxième grandeur de procédé est la vitesse du son dans le milieu (M) ou une grandeur dérivée de celle-ci.

7. **Procédé selon l'une des revendications 1 à 6,**
dans lequel la viscosité du milieu (M) est déterminée comme troisième grandeur de procédé.

Fig. 1

2

5

11a        10b        11b

10a

8

4

9a         9b

**Fig. 2a**

A          A          $E_A$

4

9a         9b

2

11a        11b

S          $E_S$

10a        10b

12

**Fig. 2b**

**Fig. 2**

Fig. 2c

Fig. 2d

Fig. 2

Fig. 3

Fig. 4

Fig. 5a

Fig. 5b

Fig. 5

Fig. 6a

Fig. 6b

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6260408 B1
- DE 102006034105 A1
- DE 102007013557 A1
- DE 102005015547 A1
- DE 102009026685 A1
- DE 102009028022 A1
- DE 102010030982 A1
- DE 00102010030982 A1
- DE 10050299 A1
- DE 102007043811 A1
- DE 10057974 A1
- DE 102006033819 A1
- DE 102015102834 A1
- DE 102016112743 A1
- DE 102012100728 A1
- DE 102017130527 A1
- WO 2020094266 A1
- DE 102019116150 A1
- DE 102019116151 A1
- DE 02019116152 A1
- DE 102019110821 A1
- DE 102020105214 A1
- DE 102020116278 A1
- GB 2527759 A
- JP S6067839 A